# EUROPÄISCHE PATENTSCHRIFT

(11) **EP 1 288 531 B1**
(45) Veröffentlichungstag und Bekanntmachung des Hinweises auf die Patenterteilung: **09.11.2005**
(21) Anmeldenummer: 02018915.5
(22) Anmeldetag: 23.08.2002
(51) Int. Cl.: F16H 57/02, F16H 48/08

(54) **Ausgleichsgehäuse für ein Ausgleichsgetriebe**
Differential gear case
Boîte d' engrenage différentiel

(30) Priorität: 28.08.2001 DE 10141995
(43) Veröffentlichungstag der Anmeldung: 05.03.2003
(73) Patentinhaber: Johann Hay GmbH & Co. KG, Automobiltechnik, 55566 Bad Sobernheim (DE)
(72) Erfinder:
(74) Vertreter: Liesegang, Roland

(56) Entgegenhaltungen:
- US-A- 6 146 304
- PATENT ABSTRACTS OF JAPAN vol. 011, no. 352 (M-643), 18. November 1987 (1987-11-18) & JP 62 132055 A (TOMIO TOZAWA;OTHERS: 01), 15. Juni 1987 (1987-06-15)
- PATENT ABSTRACTS OF JAPAN vol. 1999, no. 08, 30. Juni 1999 (1999-06-30) & JP 11 072158 A (SHOWA:KK), 16. März 1999 (1999-03-16)

## Beschreibung

Die Erfindung betrifft ein Ausgleichsgehäuse für ein Ausgleichsgetriebe, entsprechend dem Oberbegriff der Ansprüche 1 und 12.

Aus der JP-A 62-132 055 ist ein Ausgleichsgehäuseteil bekannt, das topfförmig mit einem Lageransatz am Boden des Topfes zum Lagern einer Achsabtriebswelle ausgebildet ist. Das andere offene Ende des Topfes ist von einem damit gemeinsam geschmiedeten Achsantriebsrad umgeben und durch einen Deckel verschlossen, welcher einen mit dem erstgenannten Lageransatz fluchtenden Lageransatz zum Lagern der anderen Achsabtriebswelle aufweist und an das Achsantriebsrad über einen radialen Flansch angeschraubt ist. Der Innenraum des Topfes ist von dessen offener Seite her bearbeitbar. Die Ausgleichs- und Achsabtriebsräder des Ausgleichsgetriebes werden in das Ausgleichsgehäuseteil über das offene Ende des Topfes eingeführt und zusammen mit einem die Ausgleichsräder lagernden Bolzen montiert, worauf dann der Deckel an das Achsantriebsrad angeschraubt wird.

Die JP 09-233 784 offenbart ein Ausgleichsgehäuse mit einem einstückig mit dem Ausgleichsgehäuseteil geschmiedeten Achsabtriebsrad, wobei das Ausgleichsgehäuse derart große axiale Bohrungen aufweist, daß die Ausgleichs- und Achsabtriebsräder in dessen Innenhohlraum über eine der Axialbohrungen eingebracht und montiert werden können. In die axialen Bohrungen werden Lagerhülsen eingesetzt, wobei eine Lagerhülse auf einer Seite des Ausgleichsgehäuseteils verpreßt und eine weitere andere Lagerhülse auf der gegenüberliegenden Seite mittels biegbarer Klemmfinger positioniert und befestigt werden.

Beide bekannten Ausgleichsgehäuse haben einen beträchtlichen Montageaufwand. Beim Ausgleichsgehäuse gemäß der JP'055 müssen die Bohrungen am radialen Flansch derart präzise eingebracht werden, daß der Lageransatz des Deckels eine präzise radiale Lagerung für die in den Lageransatz einzubringende Achsabtriebswelle bereitstellt. Außerdem ist beim Anschrauben des Deckels an den Flansch stets darauf zu achten, daß der Deckel durch die Schraubkraft nicht verspannt sowie verzogen und damit dessen Lageransatz nach montagegerechter Ausrichtung nicht aus seiner radialen und axialen Position zur Lagerung der Achsabtriebswelle verrückt wird. Ferner müssen für eine positionsgenaue axiale Lagerung der Achsabtriebswelle die Montageflächen des Flansches und des Ausgleichgehäuseteils präzise gearbeitet sein.

Bei der Realisierung des Preßsitzes der Lagerhülse in dem Ausgleichsgehäuseteil gemäß der JP'784 ist eine Nachbearbeitung des Lageransatzes der Lagerhülse insofern für eine entsprechend genaue Lagerung der Achsabtriebswelle notwendig, als sowohl durch Preßfügen oder Aufschrumpfen Verzugsspannungen und -dehnungen der Lagerhülse ausgeglichen werden müssen. Bei der Befestigung mittels der Klemmfinger sind sehr viele Montageschritte notwendig, weswegen und wegen der Ausbildung von Klemmfingern an der Lagerhülse oder an dem Ausgleichsgehäuseteil diese Art der Befestigung der Lagerhülse teuer ist. Ferner kann beim Verklemmen eine präzise axiale Positionierung erst durch Nachstellen oder Nachbearbeiten des Lageransatzes sichergestellt werden.

Aus der gattungsgemässen US 6,146,304 ist ein Ausgleichsgehäuse mit einem Ausgleichsgehäuseteil und einem damit einstückig verbundenen Achsantriebsrad bekannt. Das Ausgleichsgehäuse hat eine Öffnung, in die ein Deckel eingepreßt ist.

Es ist Aufgabe der Erfindung ein Ausgleichsgehäuse zu schaffen, das eine zum Lagern einer Achsantriebswelle ausgelegte Hülse aufweist, die in einer Montage- und/oder Bearbeitungsöffnung des Ausgleichsgehäuseteils auf konstruktiv einfache und fertigungstechnisch wirtschaftliche Weise bei reduzierter Montagezeit ausgerichtet und ortsfest bezüglich des Ausgleichsgehäuseteils eingesetzt sein soll.

Diese Aufgabe wird durch Anspruch 1 gelöst. Ausgleichsgehäuse mit einem Ausgleichsgehäuseteil und einem damit einstückig verbundenen Achsantriebsrad bedürfen einer Öffnung, über die zumindest der Innenhohlraum des Ausgleichsgehäuseteils bearbeitet werden kann. Unter Umständen dient diese Öffnung auch dazu, Ausgleichs- und Achsabtriebsräder in den Innenhohlraum einzubringen. Bei dem erfindungsgemäßen Ausgleichsgehäuse wird eines der axialen Bohrungen zur Lagerung der Achsabtriebswelle als Bearbeitungsöffnung verwendet. Dafür ist diese axiale Bohrung größer als die gegenüberliegende Bohrung ausgeführt, die insbesondere dazu ausgelegt ist, direkt die Achsabtriebswelle lagernd aufzunehmen. Gemäß der Erfindung ist eine Lagerhülse vorgesehen, die in die Bohrung mit größerem Durchmesser für ihre präzise axiale und radiale Ausrichtung eingeschraubt und unter Ausbildung eines Preßsitzes an dem Ausgleichsgehäuseteil sicher und fest gehalten wird. Bei dieser kombinierten Schraub- und Preßverbindung stellt die Schraubverbindung vor allem den axialen Halt der Lagerhülse insbesondere beim Einsetzen der Lagerhülse und bei Bildung des Preßsitzes sicher, während der Preßsitz zum einen die radiale Position der Lagerhülse festlegt und zum anderen gewährleistet, daß die Lagerhülse auch bei extrem hohen axialen und radialen Betriebskräften fest an dem Ausgleichsgehäuseteil gehalten wird.

Ferner sei angemerkt, daß das erfindungsgemäße Ausgleichsgehäuse ein wesentlich geringeres Gewicht als die bekannten Ausgleichsgehäuse mit Schrauben, Nieten oder Klemmteilen aufweist. Zudem bietet das erfindungsgemäße Ausgleichsgehäuse die Grundlage für eine schnelle Fertigung, weil keine zeitaufwendigen Montageschritte, wie das Anziehen von Schrauben, das Umbiegen von Klemmteilen, die Nachbearbeitung beispielsweise durch Schleifen oder das Annieten notwendig sind. Schließlich kann bei dem erfindungsgemäßen Ausgleichsgehäuse die Montage der Ausgleichs- und Achsabtriebsräder sowie das Verschließen des Ausgleichsgehäuseteils mit der Lagerhülse automatisiert werden.

Vorzugsweise wird die kombinierte Schraub- und Preßverbindung um einen durch ein Außengewinde an der Lagerhülse und ein damit verschraubtes Innengewinde der Bohrung mit größerem Durchmesser realisiert. Zum anderen schließt an die Gewindebereiche der Lagerhülse und der Bohrung jeweils eine glatte, sich axial erstreckende Fläche an, welche Flächen im montierten Zustand unter Ausbildung eines Preßsitzes aneinander liegen.

In einer Weitergestaltung der Erfindung ist eine Nut an der Innenfläche des Hohlraums vorgesehen, die als Schmiermittelreservoir dient. Die Nut verläuft an der Innenfläche des Hohlraums insbesondere in einer radialen Ebene des Ausgleichsgehäuses, in welcher insbesondere die Achsen von fluchtenden Bohrungen eines Lagerbolzens für Ausgleichsräder liegen. Überraschender Weise zeigte sich, daß sich durch die Nut stets ein ausreichend großer Schmiermittelfilm zwischen den Ausgleichs- und Achsabtriebsrädern und der Innenfläche des Hohlraums bildet. Aufgrund dessen sind Kunststoffanlaufscheiben oder Blechschalen zwischen den Ausgleichs- und Achsabtriebsrädern und der Innenfläche des Hohlraums hinfällig. Dies erleichtert wiederum das Montieren der Ausgleichs- und Achsabtriebsräder in das Ausgleichsgehäuse.

In einer bevorzugten weiteren Ausbildung der Erfindung ist die Bohrung mit größerem Durchmesser derart bemessen, daß sie als Montageöffnung für die Ausgleichs- und Achsabtriebsräder dienen kann. Ein besonders einfach herstellbares, insbesondere schmiedbares, Ausgleichsgehäuse mit einem sehr geringen Gewicht kann vorteilhafter Weise dadurch realisiert werden, daß keine seitlichen Montageöffnungen mehr vorgesehen werden. In dieser vorteilhaften Ausführung wird also ein Hohlraum für die Eingeweiden des Ausgleichsgetriebes geschaffen, der im montierten Zustand der Lagerhülse, der Achsabtriebswellen und des Lagerbolzens für die Ausgleichsräder vollkommen abgeschlossen ist und als abgeschlossener Schmiermittelraum von einer Schmiermittelversorgung von außen unabhängig sein kann.

Durch die fehlenden seitlichen Montageöffnungen wird zudem das Schmieden des Ausgleichsgehäuses insofern erleichtert, als kein für die Montageöffnungen notwendiges Vorschlitzen des Ausgleichsgehäuserohlings erforderlich ist. Ferner muß nach der mechanischen, insbesondere spanabhebenden, Bearbeitung des geschmiedeten Ausgleichsgehäuserohlings die seitlichen Montageöffnungen nicht mehr entgratet werden.

Um eine ausreichende Härte der Verzahnung unter Beibehaltung einer ausreichenden Zähigkeit im Zahnkem zu gewährleisten, ist ein Induktionshärteverfahren zu verwenden. Dies wird detailliert in einem späteren Abschnitt beschrieben.

Ferner betrifft die Erfindung ein Verfahren zum Herstellen eines erfindungsgemäßen Ausgleichsgehäuses gemäß Anspruch 7.

Um die erfindungsgemäße kombinierte Schraub- und Preßverbindung zu realisieren, wird gemäß einer bevorzugten Ausführung des erfindungsgemäßen Verfahrens zuerst der die axiale Bohrung umgebende Bereich durch Erwärmung geweitet. Währenddessen oder danach wird die Lagerhülse in die axiale Bohrung eingeschraubt. Anschließend wird durch Abkühlung des die Axialbohrung umgebenden Bereichs die in die Axialbohrung eingeschraubte Lagerhülse eingeschrumpft. Für die kombinierte Schraub- und Preßsitzverbindung sind jeweils separate Gewinde- und Preßsitzflächenbereiche vorgesehen.

Bei einer bevorzugten Ausführung des erfindungsgemäßen Verfahrens wird die Verzahnung des Achsabtriebsrads induktiv gehärtet, insbesondere gemäß eines Zwei-Frequenz-Induktionsverfahrens. Dabei wird die Verzahnung mithilfe einer um die Verzahnung gelegte Induktionsschlaufe oder -spule induktiv erwärmt, indem die Induktionsspule entweder simultan oder nacheinander mit einer Hochfrequenz- und einer Mittelfrequenz-Spannung versorgt wird. Ist eine hohe Temperatur nur im Zahngrund erwünscht, wird ein Frequenzgemisch aus 10% Hochfrequenz und 90% Mittelfrequenz angelegt. Ist hingegen eine hohe Temperatur nur im Zahnkopf erforderlich, wird ein Frequenzgemisch aus 90% Hochfrequenz und 10% Mittelfrequenz verwendet. Vorteilhafter Weise ist eine gleichbleibend dicke oberflächennahe gehärtete Schicht gewünscht, so daß eine entsprechende Einstellung des Frequenzgemisches in den oben erwähnten Grenzen vorgenommen werden soll.

Für eine optimale Temperaturverteilung kann ein Frequenzgemisch von 30% Hochfrequenz und 70% Mittelfrequenz angegeben werden.

Die Erfindung kann auch ein Ausgleichsgehäuse vorsehen, bei dem das Ausgleichsgehäuseteil, das Achsantriebsrad und das Parksperrenrad als einteiliges Schmiedestück ausgebildet sind. Damit ist es möglich, die Funktionen des Achsantriebsrads, des Ausgleichsgehäuseteils und des drehenden Teils der Parksperre, nämlich des Parksperrenrads, in einem einzigen Bauteil zusammenzufassen, das kompakt und leicht ist und gleichwohl den getrennten Anforderungen an seine Bestandteile genügt, nämlich hohe Dauer- und Verschleißfestigkeit der Verzahnungen des Achsantriebsrads und des Parksperrenrads bei lediglich durch den Zahnkranz des Parksperrenrades erhöhtem Gewicht.

Wegen der Einteiligkeit von Parksperrenrad und Ausgleichsgehäuse muß für das Parksperrenrad keine eigene Fixierung beispielsweise an einem mit dem Fahrzeugrad verbundenen Drehteil bereitgestellt werden. Die Lagerung des Ausgleichsgehäuses ist ausgelegt, hohe Belastungen zu ertragen, so daß auch die auf das Parksperrenrad wirkenden Kräfte ohne weiteres von der Ausgleichsgehäuselagerung aufgenommen werden können, ohne Modifikationen an der Lagerung vornehmen zu müssen. Ein weiterer Vorteil des erfindungsgemäß geschmiedeten Ausgleichsgehäuses liegt darin, daß dessen Gewicht gegenüber dem vergleichbaren Gesamtgewicht eines entsprechend ausgelegten Ausgleichsgehäuseteils mit Achsantriebsrad und eines separaten Parksperrenrads um mindestens 20% reduziert ist.

Die Ausgleichs- und Achsabtriebsräder werden über eine in dem Ausgleichsgehäuseteil vorgesehene seitliche Montageöffnung in den innen bearbeiteten Hohlraum des Ausgleichsgehäuses eingebracht und dort gelagert. Zwischen der Innenfläche des Hohlraumes und den Ausgleichs- und Achsabtriebsrädern kann eine kugelförmige Kunststoff-Lagerschale vorgesehen sein, die beweglich an der Innenfläche anliegt.

Das einstückig mit dem Ausgleichsgehäuse ausgebildete Parksperrenrad überdeckt teilweise die Montageöffnungen. Damit die Ausgleichs- und Achsabtriebsräder dennoch an dem Parksperrenrad vorbei in das Ausgleichsgehäuse eingebracht werden können, ist das Parksperrenrad im Bereich der Montageöffnung hin zum Hohlraum des Ausgleichsgehäuses ausgehöhlt, wodurch eine ausreichend bemessene Montageöffnung gebildet ist.

Eine weitere vorteilhafte Ausgestaltung der Erfindung besteht zur Realisierung einer einfachen Montage der Ausgleichs- und Achsabtriebsräder über die seitliche Montageöffnung in den Hohlraum des Ausgleichsgehäuseteils und insbesondere für eine einfache Bearbeitung der Innnenfläche des Hohlraums über die seitliche Montageöffnung darin, im Ausgleichsgehäuseteil gegenüberliegende, fluchtende Bohrungen zur Aufnahme eines Lagerbolzens für die Ausgleichsräder in einem derart großen Abstand zum Achsantriebsrad anzuordnen, daß eine genügend große, durch das Parksperrenrad nicht mehr eingeschränkte Montageöffnung geschaffen wird, welche ein ungehindertes Einführen der Ausgleichs- und Achsabtriebsräder zuläßt. Außerdem gewährleistet ein entsprechend großer Abstand der Bohrungen für den Lagerbolzen zum Achsantriebsrad ein einfaches Schmieden des Ausgleichsgehäuses, weil das schwieriger zu schmiedende Gehäuseteil mit dem kugeligen Hohlraum weiter von dem Achsantriebsrad entfernt ist.

Üblicherweise wird der Hohlraum zur Aufnahme von Ausgleichs- und Achsabtriebsrädern über die Montageöffnung bearbeitet, nämlich beispielsweise bei dem Ausgleichsgehäuseteil gemäß der JP-A 62-132 055 von der offenen Seite des Topfes her und bei dem Ausgleichsgehäuse gemäß der JP-A 09-229 162 durch die Montageöffnung von der Seite her, um innere Abstützflächen im Ausgleichsgehäuseteil für die Ausgleichsräder und gegebenenfalls auch für die Achsabtriebsräder zu schaffen. Insbesondere bei dem zweitgenannten einteiligen Ausgleichsgehäuse ohne Deckelanordnung muß zur Bearbeitung der Innenfläche des Hohlraums das Ausgleichsgehäuse seitlich - also auf einer zur Rotationsachse des Ausgleichsgehäuses senkrechten Achse - eingespannt werden. Dies führt zu Unwuchten, welche durch Gewichte ausgeglichen werden müssen. Um eine derartige Einspannung zu realisieren, müssen separate Aussparungen am Ausgleichsgehäuse vorgesehen sein, in welche das materialabhebende Werkzeug eingreifen kann. Ferner können unter Umständen die seitlichen Montageöffnungen für die Bearbeitung der Innenfläche des Hohlraums des Ausgleichsgehäuses nicht groß genug oder für das jeweilige Bearbeitungsverfahren ungeeignet geformt sein.

Zur Innenbearbeitung des Hohlraumes des Ausgleichsgehäuses ist eine der fluchtenden axialen Bohrungen zur Lagerung der Achsabtriebswellen mit einem derart großen Durchmesser ausgebildet, daß ein materialabhebendes Werkzeug durch die Abtriebswellenbohrung hindurch in den Hohlraum des Ausgleichsgehäuses zur spanabhebenden Bearbeitung der Innenfläche eingeführt werden kann. Diese Ausgestaltung des Ausgleichsgehäuses hat den Vorteil, daß das Ausgleichsgehäuse zur Bearbeitung einfacher und ohne Maßnahmen zum Ausgleich von Unwuchten in der Werkzeugmaschine eingespannt und innen bearbeitet werden kann, weil die Aufspannachse mit der Rotationsachse des Ausgleichsgehäuses zusammenfällt. Ferner liegen somit greifbare rotationssymetrische Aussparungen ohnehin vor oder sind leicht realisierbar.

Diese Ausgestaltung ist bei eingeschränkter Größe der seitlichen Montageöffnungen von Vorteil ist, wie sie insbesondere bei Vorhandensein eines integrierten Parksperrenrades vorliegen.

Für die Lagerung der Abtriebswelle in der zum Einführen des Bearbeitungswerkzeuges vergrößerten Bohrung ist eine separate Lagerhülse vorgesehen. Diese kann in die Bohrung eingepreßt oder eingeschrumpft sein. Sie kann auch mit dem geschmiedeten Ausgleichsgehäuse verschweißt sein. Vorzugsweise wird für das Schmiedestück ein Vergütungsstahl verwendet, der dem Ausgleichsgehäuse bereits eine beträchtliche Härteeigenschaft und eine gute Dauer- und Verschleißfestigkeit verleiht.

Beim erfindungsgemäßen Verfahren können das Achsantriebsrad, das Ausgleichsgehäuseteil und das Parksperrenrad in einem Bauteil zusammengefaßt in einem einzigen Arbeitsgang hergestellt werden. Gegenüber den herkömmlichen Herstellungsverfahren von Ausgleichsgehäusen mit vergleichbaren Funktionen sind also wesentlich weniger Arbeitsschritte erforderlich.

Um eine ausreichend harte und verschleißfeste Verzahnung sowohl für das Achsantriebsrad als auch für das Parksperrenrad zu erhalten, müssen diese gehärtet werden. Bisher hat man die separat geschmiedeten Zahnräder im Einsatz gehärtet. Ein Einsatzhärten des erfindungsgemäßen einteiligen Schmiedestückes wäre jedoch sehr zeit- und kostenaufwendig und überdies für die übrigen Bereiche des Ausgleichsgehäuses, das ausreichend zäh bleiben und sich nicht verziehen soll, unangebracht.

Um Aufwand und Zeit des Härtens entscheidend zu verringern, ist gemäß einer besonders vorteilhaften Weiterbildung der Erfindung vorgesehen, daß die Verzahnungen induktionsgehärtet werden. Damit lokal der zu härtende Bereich mittels Hochfrequenz kurzzeitig, d. h. für wenige Sekunden, erhitzt werden kann, ist lediglich um den jeweiligen Verzahnungsbereich des betreffenden Rades eine Induktionsspule anzulegen. Unmittelbar darauf wird das Bauteil abgeschreckt. Auf diese Weise werden einerseits eine hohe Oberflächenhärte der Verzahnung und andererseits eine ausreichende Zähigkeit im Kern des Zahnfußes erreicht. Die Verzahnung muß nach dem lokalen Induktionshärten nicht mehr nachbearbeitet werden. Folglich kann die Verzahnung vor dem Härten geschabt werden, was billiger als das nach dem Einsatzhärten erforderliche Schleifen ist. Beim Induktionshärten wird das Bauteil vorzugsweise auf eine Temperatur zwischen 400 und 800°C, vorzugsweise 500°C erhitzt, wobei das Erhitzen weniger als 5 Sekunden, vorzugsweise 0,5 bis 1 Sekunde, lang sein kann.

Bei einem bevorzugten Induktionshärterverfahren wird der zu härtende Bereich zuerst bei einer Mittelfrequenz 3 bis 4 Sekunden lang vorgewärmt. Unmittelbar darauf wird das zu härtende Bauteil kürzer als eine Sekunde hochfrequent erhitzt, um anschließend sofort abgeschreckt zu werden. Mit diesem Schußhärten können die gewünschten Härteeigenschaften der Verzahnung erreicht werden. Um einen Wärmeabfluß von der heißen Verzahnung in das Ausgleichsgehäuseteil und das unter Umständen damit einhergehende Verziehen des Ausgleichsgehäuses zu verhindern, sind im Übergangsbereich von der Verzahnung des Achsantriebsrads und des Ausgleichsgehäuseteils Aussparungen vorgesehen, die als Wärmeflußwiderstand dienen. Zusätzlich reduzieren die Aussparungen das Gewicht des Ausgleichsgehäuses.

Es sei angemerkt, daß das Ausgleichsgehäuse mit Parksperrenrad auch mit der eingeschraubten und eingepreßten Lagerhülse versehen sein kann. Ferner ist das Ausgleichsgehäuse mit dem Parksperrenrad ebenfalls mit den vorteilhaften Ausführungen der eingeschraubten und eingepreßten Lagerhülse gestaltbar.

Die Erfindung ist im Folgenden anhand der Zeichnungen an Ausführungsbeispielen mit weiteren Einzelheiten erläutert:
- Fig. 1: eine perspektivische Ansicht eines Ausgleichsgehäuses;
- Fig. 2: eine perspektivische Ansicht des um 90° um die Rotationsachse Z gedrehten Ausgleichsgehäuses nach Fig. 1;
- Fig. 3: eine Draufsicht des Ausgleichsgehäuses nach den Fig. 1 und 2;
- Fig. 4: eine Querschnittsansicht des Ausgleichsgehäuses entlang der Schnittlinie IV-IV nach Fig. 3;
- Fig. 5: eine Querschnittsansicht des Ausgleichsgehäuses entlang der Schnittlinie V-V nach Fig. 3;
- Fig. 6: eine Querschnittsansicht des Ausgleichsgehäuses entlang der Schnittlinie VI-VI nach Fig. 4;
- Fig.7: eine perspektivische Ansicht eines weiteren Ausgleichsgehäuses ohne Parksperrenrad; und
- Fig.8: eine Querschnittsansicht des Ausgleichsgehäuses gemäß Fig. 7 entsprechend des Schnitts nach Fig. 5.
- Fig. 9A, 9B: jeweils eine perspektivische Ansicht eines erfindungsgemäßen Ausgleichsgehäuses ohne Parksperrenrad; und
- Fig. 10: eine Querschnittsansicht des Ausgleichsgehäuses gemäß den Fig. 9A und 9B;
- Fig. 11: eine Schnittansicht des Ausgleichsgehäuses gemäß den Fig. 9A und 9B entlang der Schnittlinie XI-XI gemäß Fig. 10;
- Fig. 12A, 12B: jeweils eine perspektivische Ansicht eines weiteren erfindungsgemäßen Ausgleichsgehäuses ohne Parksperrenrad;
- Fig. 13: eine Querschnittsansicht des Ausgleichsgehäuses gemäß den Fig. 12A und 12B; und
- Fig. 14: eine Schnittansicht des Ausgleichsgehäuses gemäß den Fig. 12A und 12B ent lang der Schnittlinie XIV-XIV nach Fig. 13.

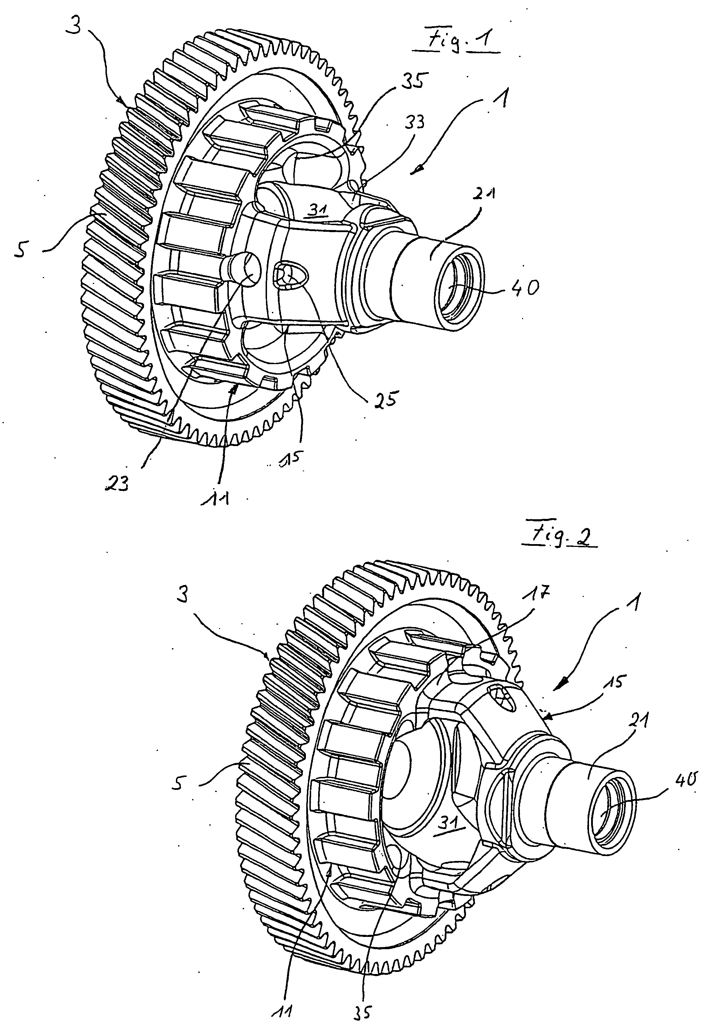

Das in den Figuren 1 bis 6 dargestellte Ausgleichsgehäuse 1 eines Ausgleichsgetriebes hat ein sich radial erstreckendes Achsantriebsrad 3, das hier als Stirnrad ausgebildet ist und an seinem Umfang eine Schrägverzahnung 5 aufweist. Der breite Bereich der schrägen Verzahnung 5 geht mit einem felgenartigen schmalen Übergangsbereich 7 in ein Parksperrenrad 11 über, das benachbart und koaxial zu dem Achsantriebsrad 3 angeordnet ist.

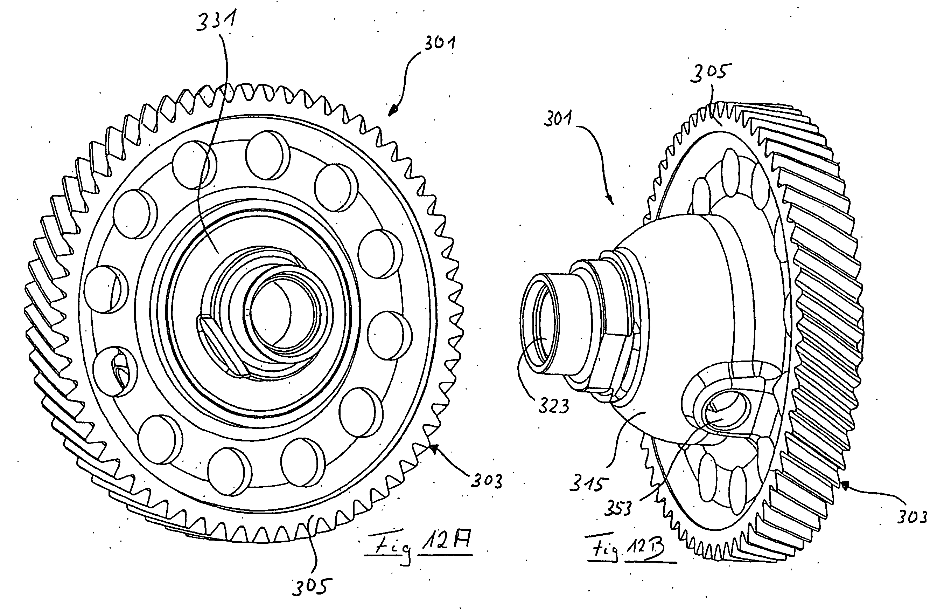

Dieses Parksperrenrad 11 hat an seinem Umfang eine Stirnverzahnung 13, in die eine nicht dargestellte Parksperrenklinke einrasten kann, um ein Fahrzeug gegen Wegrollen zu sichern. Mit dem Parksperrenrad 11 ist einstückig ein Ausgleichsgehäuseteil 15 (s. Fig. 2 und 5) verbunden. Das Ausgleichsgehäuseteil 15 weist auf seiner dem Parksperrenrad 11 abgewandten Seite einen Hohlzapfen 21 zur Lagerung einer nicht dargestellten Achsabtriebswelle auf. Alle genannten Bauteile des Ausgleichgehäuses 1 sind aus einem Rohling aus Vergütungsstahl geschmiedet. Sollten nach dem Schmieden am Parksperrenrad 11 größere Maßungenauigkeiten auftreten, wird das Parksperrenrad 11 nach dem Schmieden kalt kalibriert. Ferner wird das Ausgleichsgehäuse 1, wo notwendig, spanend bearbeitet. Im montierten Zustand ist das Ausgleichsgehäuse 1 um die Rotationsachse Z drehbar in einer nicht dargestellten Lageranordnung untergebracht.

Am Übergang von Parksperrenrad 11 und Ausgleichsgehäuseteil 15 sind fluchtende Bohrungen 23 mit einer gemeinsamen Achse A zur Aufnahme eines nicht dargestellten Lagerbolzens für nicht dargestellte Ausgleichsräder vorgesehen. Benachbart zu einer Bohrung 23 ist ein Loch 25 vorgesehen, durch das ein nicht dargestellter Sicherungsstift zum Sichern des Lagerbolzens gesteckt ist.

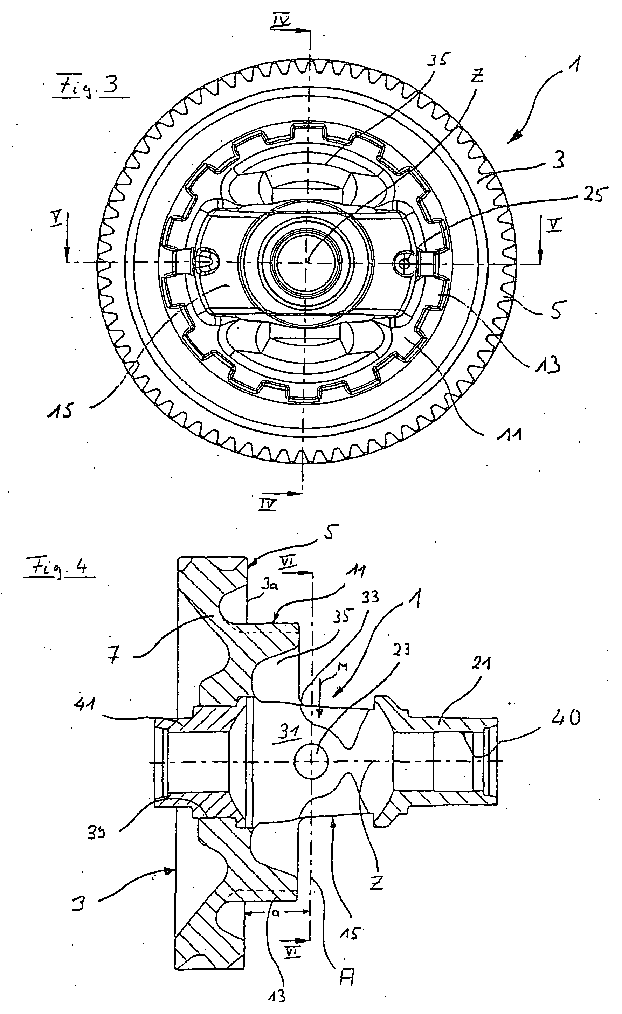

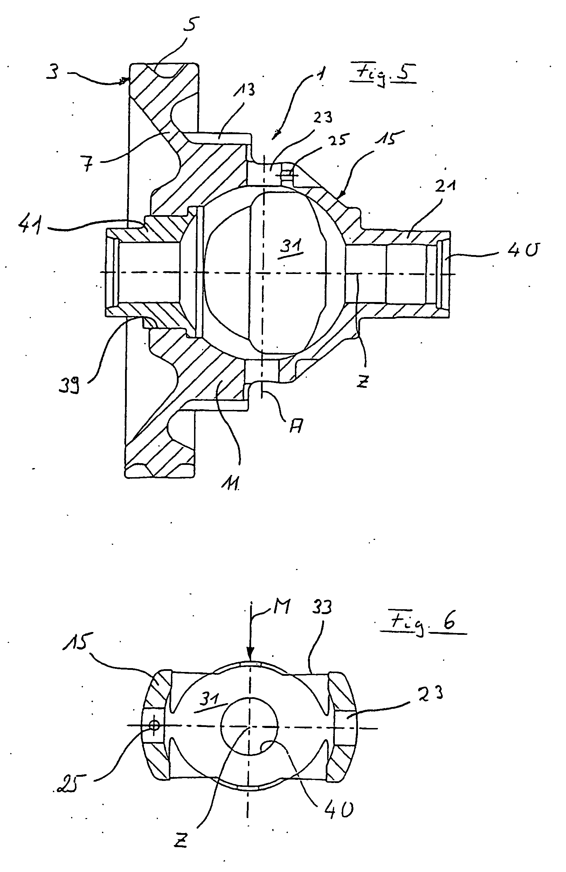

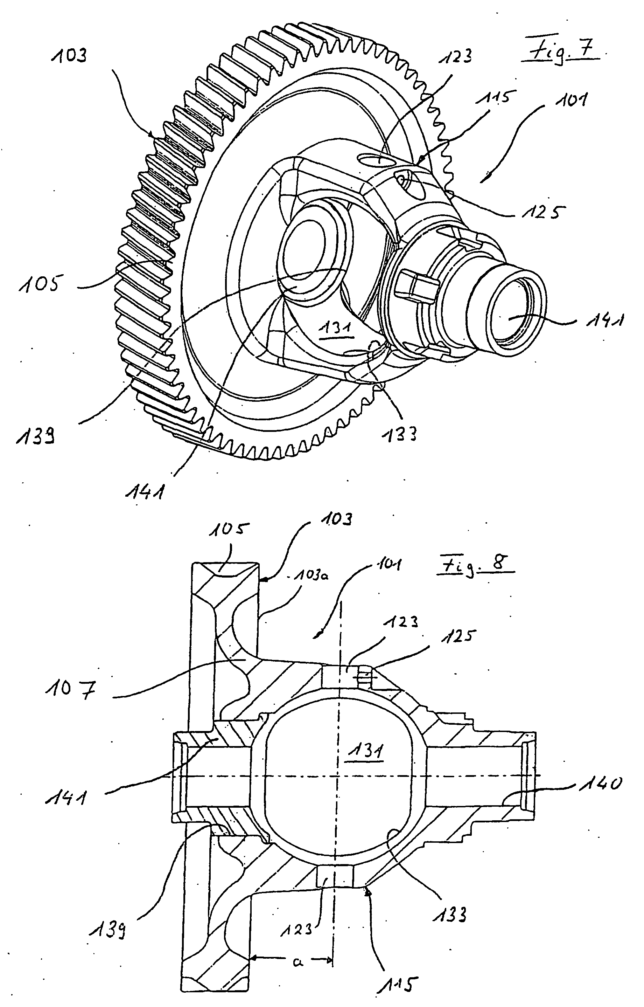

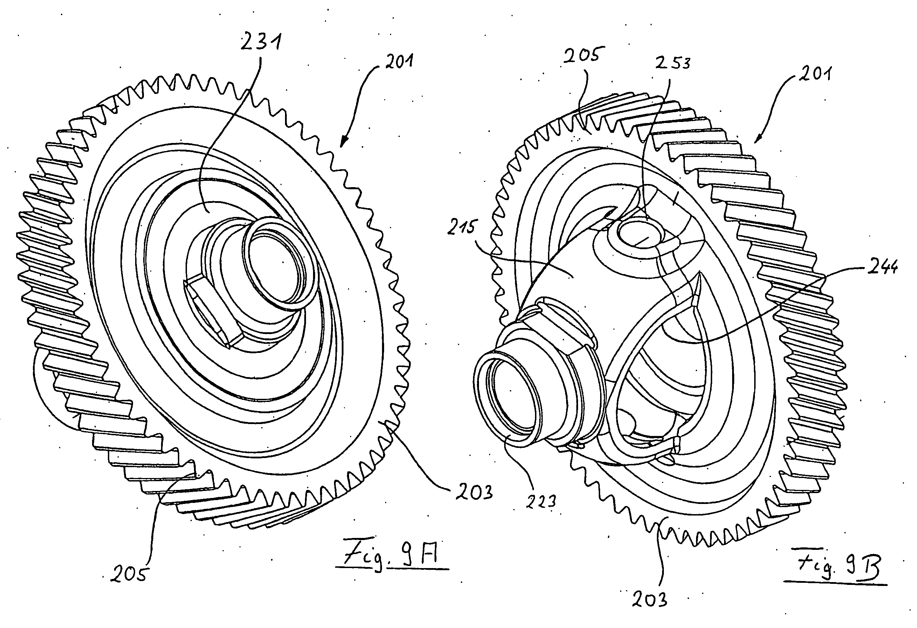

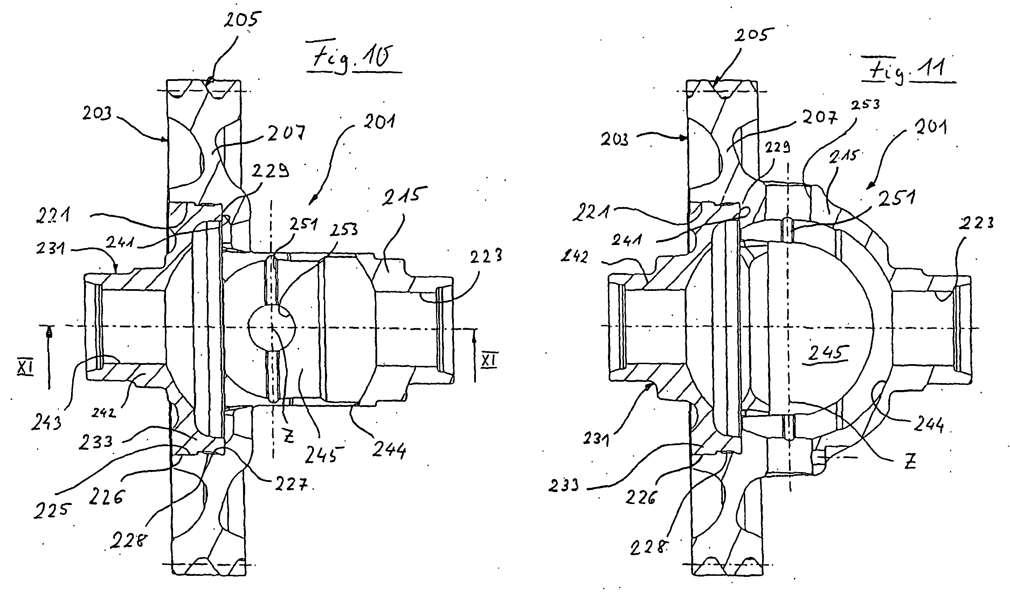

Das Ausgleichsgehäuseteil 15 und das Parksperrenrad 11 begrenzen einen im wesentlichen kugeligen Hohlraum 31, in den die Ausgleichs- und Achsabtriebsräder über eine Montageöffnung 33 seitlich - d. h. in einer zur Rotationsachse Z senkrechten Montagerichtung M (siehe Fig. 4 und 6) - in das Ausgleichsgehäuseteil 15 einzubringen sind. Für ein leichtes Einsetzen der Ausgleichs- und Achsabtriebsräder ist das Parksperrenrad 11 mit einer Ausnehmung 35 ausgebildet, die einen Abschnitt der Montageöffnung 33 bildet. Der Abstand a der Achse A von der dem Parksperrenrad 11 zugewandten Seite 3a des Achsantriebsrads 3 ist so bemessen, dass eine zur Montage der Ausgleichs- und Achsabtriebsräder ausreichend große seitliche Montageöffnung 33 zu Verfügung steht.

Das Ausgleichsgehäuse 1 hat zwei koaxial zur Rotationsachse Z liegende Bohrungen 39, 40 zum Lagern von nicht dargestellten Achsabtriebswellen. Der Durchmesser der von dem Achsantriebsrad 3 umgebenen Abtriebswellenbohrung 39 ist so groß, daß ein nicht dargestelltes spanabhebendes Werkzeug durch die Abtriebswellenbohrung hindurch in den Hohlraum 31 eingeführt werden und zum Bearbeiten der Innenfläche des Hohlraums 31 angestellt werden kann. Zur Lagerung der Achsabtriebswelle ist eine Lagerhülse 41 in die Abtriebswellenbohrung 39 eingepreßt (Fig. 4 und 5). Die Lagerhülse 41 kann auch mit dem sie umgebenden Bereich des Achsantriebsrads 3 verschweißt sein.

In den Figuren 7 und 8 ist ein Ausgleichsgehäuse 101 in einer weiteren erfindungsgemäßen Ausgestaltung ohne Parksperrenrad dargestellt. Identische und ähnliche Bauteile sind mit den gleichen, jedoch um 100 erhöhten Bezugsziffern versehen. Das auch hier als einteiliges Schmiedestück hergestellte Ausgleichsgehäuse 101 umfasst ein Achsantriebsrad 103 und ein kontinuierlich an den Übergangsbereich 107 anschließendes Ausgleichsgehäuseteil 115. Am Ausgleichsgehäuseteil 115 sind seitliche Montageöffnungen 133 vorgesehen, über die nicht dargestellte Ausgleichs- und Achsabtriebsräder in den Hohlraum 131 eingesetzt werden können. Zur Bearbeitung der Innenfläche des Hohlraums 131 ist der Durchmesser der von dem Achsantriebsrad 103 umgebenen Bohrung 139 zur Lagerung einer nicht dargestellten Achsabtriebswelle ausreichend groß dimensioniert. In diese Bohrung 139 ist eine Lagerhülse 141 eingepresst, deren Innendurchmesser zur Lagerung der Achsabtriebswelle ebenso groß bemessen ist wie die Bohrung 140 des Lagerzapfens für die andere Achsabtriebswelle.

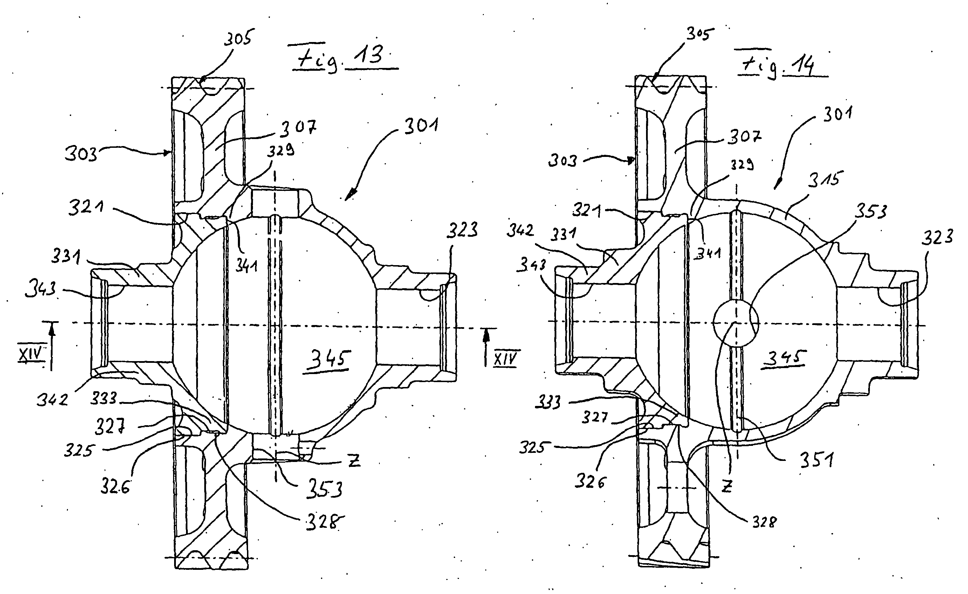

Das in den Figuren 9A und 9B dargestellte, erfindungsgemäße Ausgleichsgehäuse 201 eines Ausgleichsgetriebes hat ein sich radial erstreckendes, als Stirnrad ausgebildetes Achsantriebsrad 203. Das Achsantriebsrad 203 weist an seinem Umfang eine Schrägverzahnung 205 auf. Wie am besten in den Schnittansichten der Figuren 10 und 11 ersichtlich ist, geht der breite Bereich der Schrägverzahnung 205 über einen felgenartigen schmalen Übergangsbereich 207 in ein Ausgleichsgehäuseteil 215 über. Das Achsantriebsrad 203, der Übergangsbereich 207 und das Ausgleichsgehäuseteil 215 sind als einteiliges Schmiedestück gebildet.

Das Ausgleichsgehäuseteil 215 hat Axialbohrungen 221, 223. Die achsantriebsseitige Axialbohrung 221 hat einen größeren Durchmesser als die dem Achsantriebsrad 203 distale Axialbohrung 223. Die Axialbohrung 223 ist an ihrer Innenfläche derart ausgestaltet, daß eine Achsabtriebswelle (nicht dargestellt) gelagert werden kann.

Die Axialbohrung 221 mit größerem Durchmesser bildet einen ersten zylindrischen Flächenbereich 125, an dem ein in die Axialbohrung 221 eingeschnittenes Innengewinde 227 anschließt. Der Bereich der Axialbohrung 221 für das Innengewinde ist mit einem etwa um die Tiefe des Gewindegangs kleineren Durchmesser als der Flächenbereich 125 ausgebildet. Im Anschluß an das Innengewinde 227 ist ein radial nach innen gerichteter Absatz 229 als axialer Anschlag vorgesehen.

In der Bohrung 221 ist eine Lagerhülse 231 unter Ausbildung einer kombinierten Schraub- und Preßsitzverbindung mit dem Ausgleichsgehäuseteil 215 eingesetzt. Dafür weist die Lagerhülse 231 einen weiten Bund 233, der im montierten Zustand im wesentlichen vollständig in der Axialbohrung 221 versenkt ist. Die Lagerhülse 231 umfaßt an seinem Bund 233 einen zweiten Flächenbereich 226, der einen etwas größeren Durchmesser als der erste Flächenbereich 225 der Axialbohrung 221 aufweist und mit dem ersten Flächenbereich 225 der Axialbohrung 221 unter Ausbildung eines Preßsitzes funktional zusammenwirkt. An dem zweiten Flächenbereich der Lagerhülse 231 schließt direkt ein Außengewinde 228 an, das im montierten Zustand der Lagerhülse 231 in das Innengewinde geschraubt ist. Stößt die Lagerhülse 231 mit ihrer bohrungsendseitigen Stirnfläche 241 an den Absatz 229, hat sie die äußerste axiale Montageposition erreicht.

Die Lagerhülse 231 hat einen Lageransatz 242 mit Innenbohrung 243, die zur Lagerung einer nicht dargestellten Achsabtriebswelle ausgelegt ist.

An der Innenfläche des Innenhohlraums 245 des Ausgleichsgehäuseteils 215 ist eine in einer radialen Ebene des Ausgleichsgehäuses liegende Nut 251 eingebracht, die den Hohlraum unterbrochen von seitlichen Öffnungen 244 sowie den Bohrungen 253 zur Aufnahme eines Bolzens für die Ausgleichsräder (beide nicht dargestellt) umläuft und in der sich im Betrieb des Ausgleichsgetriebes Schmiermittel sammelt. Es stellte sich heraus, daß zur Vermeidung von beträchtlichen Reibungseffekten zwischen der Innenfläche des Hohlraums 245 und den nicht dargestellten Ausgleichs- und Achsabtriebsräder Anlaufscheiben oder -schalen nicht mehr erforderlich sind, weil sich aufgrund von sich in der Umgebung des Ausgleichsgehäuses befindlichen Schmiermittels ausgehend von der als Schmiermittelreservoir dienende Nut 251 ein ausreichender Schmierfilm zwischen der Innenfläche des Hohlraums 245 und den nicht dargestellten Ausgleichs- und Achsabtriebsräder bildet.

Die Nut 251 liegt in der radialen Ebene, in welcher auch die gemeinsame Achse Z der Bohrungen 253 für den Lagerbolzen der Ausgleichsräder liegt. Die Achse Z ist in einem derart großen Abstand zum Achsantriebsrad 203 angeordnet, daß der Lagerbolzen an dem Achsantriebsrad 203 vorbei leicht in die Bohrungen 253 einsetzbar ist.

In den Figuren 12A, 12B, 13 und 14 ist eine bevorzugte Ausführung des Ausgleichsgehäuses dargestellt, das zu der Ausführung gemäß den Figuren 9A, 9B, 10 und 11 ähnlich ist, wobei für gleiche oder ähnliche Bauteile identische Bezugsziffern verwendet werden, die um 100 erhöht sind.

Das Ausgleichsgehäuse 301 gemäß den Figuren 12A, 12B, 13 und 14 unterscheidet sich von dem Ausgleichsgehäuse 201 gemäß den Figuren 9A, 9B, 10 und 11 darin, daß keine seitlichen Montageöffnungen (244 bei der Ausführung gemäß den Figuren 9A, 9B, 10 und 11) am Ausgleichsgehäuseteil 315 vorgesehen sind.

Sind die Lagerhülse 313 sowie die nicht dargestellten Achsabtriebswellen und der nicht dargestellte Lagerbolzen für die nicht dargestellten Ausgleichsräder montiert, wird ein abgeschlossener Innenhohlraum 345 gebildet, der eine gegenüber der Umgebung des Ausgleichsgetriebes separate, auf die besonderen Reibungszustände der Eingeweiden des Ausgleichsgetriebes angepasste Schmiermittelsphäre bereitstellen kann. Ferner kann wegen der fehlenden Öffnungen (244) eine längere Nut 351 an der Innenfläche des Hohlraums 345 vorgesehen sein.

Diese geschlossene Ausgleichsgehäuseform ist insofern fertigungstechnisch vorteilhaft, als vor dem Schmiedevorgang eines Rohlings aus Vergütungsstahl kein Einschnitt für die Öffnungen (244) im Gehäuserohling mehr notwendig ist. Zudem kann durch die geschlossene Form des Ausgleichsgehäuses 301 eine geringere Wandstärke des Ausgleichsgehäuseteils 315 vorgesehen sein, wodurch das Gewicht des Ausgleichsgehäuseteils erheblich reduziert werden kann.

Die in der obigen Beschreibung, den Figuren und den Ansprüchen offenbarten Merkmale können sowohl einzeln als auch in beliebiger Kombination für die Verwirklichung der Erfindung von Bedeutung sein.

### Bezugszeichenliste

- 101/1: Ausgleichsgehäuse
- 103/3: Achsantriebsrad
- 105/5: Verzahnung
- 107/7: Übergangsbereich
- 11: Parksperrenrad
- 13: Verzahnung
- 115/15: Ausgleichsgehäuseteil
- 121/21: hohler Lagerzapfen
- 123/23: Bohrungen für Bolzen
- 125/25: Loch

- 131/31: Hohlraum
- 133/33: Montageöffnung
- 35: Ausnehmung

- 139/39: Bohrung für Antriebswelle
- 140/40: Bohrung für Antriebswelle
- 141/41: Lagerhülse

- z: Drehachse
- a: Abstand
- A: Achse der Bohrungen

- 201/301: Ausgleichsgehäuse
- 203/303: Achsantriebsrad
- 205/305: Verzahnung
- 207/307: Übergangsbereich
- 215/315: Ausgleichsgehäuseteil
- 221/321: Axialbohrung
- 223/323: Axialbohrung
- 225/325: 1. Flächenbereich
- 226/326: 2. Flächenbereich
- 227/327: Innengewinde
- 228/328: Außengewinde
- 229/329: Absatz
- 231/331: Lagerhülse
- 233/333: Bund

- 241/341: Stirnfläche
- 242/342: Lageransatz
- 243/343: Innenbohrung
- 244: seitliche Öffnungen
- 245/345: Hohlraum
- 251/351: Nut
- 253/353: Bohrung
- Z: Achse

## Patentansprüche

1. Ausgleichsgehäuse für ein Ausgleichsgetriebe mit einem Ausgleichsgehäuseteil (215, 315), das einen innen bearbeiteten Hohlraum (245, 345) mit einer Montageöffnung (221, 244, 321) für Ausgleichs- und Achsabtriebsräder aufweist, und einem mit dem Ausgleichsgehäuseteil (215, 315) einstückig verbundenen Achsantriebsrad (203, 303), wobei das Ausgleichsgehäuseteil (215, 315) zwei Bohrungen (221, 223, 321, 323) zum Lagern jeweils einer Achsabtriebswelle aufweist, wobei eine (221, 321) der Bohrungen mit einem größeren Durchmesser als die andere und so bemessen ist, daß sie zum Einführen eines Bearbeitungswerkzeugs in den Hohlraum (245, 345) ausreicht, **dadurch gekennzeichnet, daß** eine Lagerhülse (41) zur Lagerung der zugehörigen Achsabtriebswelle in die Bohrung (139) mit größerem Durchmesser geschraubt und gepresst eingesetzt ist.

2. Ausgleichsgehäuse nach Anspruch 1, **dadurch gekennzeichnet, daß** die Lagerhülse (231, 331) ein Außengewinde (228, 328), das in ein Innengewinde (227, 327) der Bohrung (221, 321) mit größerem Durchmesser eingeschraubt ist, und eine an das Außengewinde (228,328) anschließende Außenfläche aufweist, die mit Preßsitz an einer korrespondierenden Innenfläche der Bohrung (221, 321) mit größerem Durchmesser sitzt.

3. Ausgleichsgehäuse nach Anspruch 2, **dadurch gekennzeichnet,daß** das Innengewinde einen etwas kleineren Durchmesser als die Innenfläche aufweist.

4. Ausgleichsgehäuse nach einem der Ansprüche 1 bis 3, **dadurch gekennzeichnet, daß** an der Innenfläche des Hohlraums (245, 345) eine Nut (251, 351) als Schmiermittelreservoir vorgesehen ist, die insbesondere in einer Radialebene des Ausgleichsgehäuses (201, 301) angeordnet ist, in welcher vorzugsweise Achsen Z von Bohrungen (253, 359) eines Lagerbolzens für die Ausgleichsräder liegen.

5. Ausgleichsgehäuse nach Anspruch 1 bis 4, **dadurch gekennzeichnet, daß** die Bohrung (221, 321) mit größerem Durchmesser derart bemessen ist, daß sie die Montageöffnung für die Ausgleichs- und Achsabtriebsräder bildet, wobei im montierten Zustand von Lagerbolzen für Ausgleichsräder und der Achsabtriebswellen das Ausgleichsgehäuseteil (215, 315) und die Lagerhülse (231, 331) einen abgeschlossenen, insbesondere fluiddichten, Hohlraum (245, 345) bilden.

6. Ausgleichsgehäuse nach einem der Ansprüche 1 bis 5, **dadurch gekennzeichnet, daß** die Verzahnung (205, 305) des Achsantriebsrads (203, 205) induktionsgehärtet ist, insbesondere nach einem Zweifrequenz-Induktionsverfahren.

7. Ausgleichsgehäuse nach einem der Ansprüche 1 bis 6, **dadurch gekennzeichnet, daß** ein Parksperrenrad mit dem Ausgleichsgehäuseteil und dem Achsantriebsrad ein einteiliges Schmiedestück bildet.

8. Ausgleichsgehäuse nach Anspruch 7, **dadurch gekennzeichnet, daß** das Parksperrenrad auf der dem Ausgleichsgehäuseteil zugewandten Seite des Achsantriebsrads diesem benachbart angeordnet ist, wobei vorzugsweise in dem Ausgleichsgehäuseteil zum Einbringen von Ausgleichs- und Achsabtriebsrädern in den Hohlraum seitliche Montageöffnungen vorgesehen sind, welche mit einem Abschnitt in das Parksperrenrad hineinreichen.

9. Ausgleichsgehäuse nach Anspruch 7 oder 8, **dadurch gekennzeichnet, daß** das Ausgleichsgehäuseteil fluchtende Bohrungen mit einer gemeinsamen Achse (A) zur Aufnahme eines Lagerbolzens für die Ausgleichsräder aufweist, wobei der Abstand (a) der Achse (A) vom Achsantriebsrad auf die gewünschte Größe einer seitlichen Montageöffnung abgestimmt ist.

10. Ausgleichsgehäuse nach einem der Ansprüche 7 bis 9, **dadurch gekennzeichnet, daß** die Verzahnung des Achsantriebsrads induktionsgehärtet ist.

11. Ausgleichsgehäuse nach einem der Ansprüche 7 bis 10, **dadurch gekennzeichnet, daß** die Verzahnung des Parksperrenrads induktionsgehärtet ist.

12. Verfahren zur Herstellung eines Ausgleichsgehäuses mit einem Ausgleichsgehäuseteil (215, 315), dessen Hohlraum (245, 345) zum Einbringen, Unterbringen und Lagern von Ausgleichs- und Achsabtriebsrädern über eine ausreichend bemessene Axialbohrung (221, 321) innen bearbeitet wird, wobei das Ausgleichsgehäuseteil (215, 315) mit einem Achsantriebsrad (203, 303) aus einem Teil geschmiedet wird, **dadurch gekennzeichnet, daß** eine Lagerhülse (231, 331) in die Axialbohrung (221, 321) eingeschraubt und mit der Axialbohrung verpresst, insbesondere in die Axialbohrung eingeschrumpft, wird.

13. Verfahren nach Anspruch 12, **dadurch gekennzeichnet, daß** die Axialbohrung (221, 321) durch Erwärmung geweitet wird, anschließend die Lagerhülse (231, 331) in die Axialbohrung (221, 321) eingeschraubt wird und die Lagerhülse (231, 331) in der Axialbohrung (221, 321) unter Ausbildung eines Preßsitzes durch Abkühlung eingeschrumpft wird.

14. Verfahren nach Anspruch 12 oder 13, **dadurch gekennzeichnet, daß** die Verzahnung (205, 305) des Achsantriebsrads (203, 303) induktionsgehärtet wird, insbesondere in einem Zweifrequenz-Induktionsverfahren.

15. Verfahren nach Anspruch 14, **dadurch gekennzeichnet, daß** die Verzahnung (205, 305) einer Hochfrequenz und einer Mittelfrequenz insbesondere gleichzeitig ausgesetzt wird.

16. Verfahren nach Anspruch 15, **dadurch gekennzeichnet, daß** ein Frequenzgemisch aus Hochfrequenz und Mittelfrequenz derart eingestellt wird, daß die oberflächennahen Schichten von Zahngrund bis zum Zahnkopf gleich stark erwärmt werden.

17. Verfahren nach einem der Ansprüche 12 bis 16, **dadurch gekennzeichnet, daß** das Ausgleichsgehäuseteil mit einem Achsantriebsrad und einem Parksperrenrad aus einem Teil geschmiedet wird.

18. Verfahren nach Anspruch 17, **dadurch gekennzeichnet, daß** die Verzahnung des Achsantriebsrads und/oder die Verzahnung des Parksperrenrads induktionsgehärtet werden, vorzugsweise in einem Zweifrequenz-Induktionsverfahren gehärtet werden, wobei insbesondere die jeweilige Verzahnung bei einem Zweifrequenz-Verfahren einer Hochfrequenz und einer Mittelfrequenz insbesondere gleichzeitig ausgesetzt wird, wobei vorzugsweise das Frequenzgemisch aus Hochfrequenz und Mittelfrequenz derart eingestellt wird, daß die oberflächennahen Schichten von Zahngrund bis zum Zahnkopf gleich stark erwärmt werden.

## Claims

1. A differential cage for a differential gear, comprising a cage member (215, 315) with a cavity (245, 345) which is machined on the inside and has an installation opening (221, 244, 321) for compensating gears and driving gears, and further comprising an axle drive gear (203, 303) which is connected integrally with the cage member (215, 315), the cage member (215, 315) having two bores (221, 223, 321, 323) to support an axle driving shaft each, one (221, 321) of the bores, which has a greater diameter than the other one, being dimensioned so as to be great enough for introduction of a machining tool into the cavity (245, 345), **characterized in that** a bearing sleeve (41) for support of the associated axle driving shaft is threaded into and press fitted in the bore (139) which has the greater diameter.

2. The differential cage as claimed in claim 1, **characterized in that** the bearing sleeve (231, 331) comprises an external thread (228, 328) screwed into an internal thread (227, 327) in the bore (221, 321) of greater diameter, and further comprises an outer surface adjacent the external thread and press fitted to a corresponding inner surface of the bore (221, 321) of greater diameter.

3. The differential cage as claimed in claim 2, **characterized in that** the internal thread has a somewhat smaller diameter than the inner surface.

4. The differential cage as claimed in any one of claims 1 to 3, **characterized in that** the inside surface of the cavity (245, 345) is formed with a groove (251, 351) serving as a lubricant reservoir and especially being disposed in a radial plane of the differential cage (201, 301) which plane preferably includes Z-axes of bores (253, 359) of a bearing pin for the compensating gears.

5. The differential cage as claimed in any one of claims 1 to 4, **characterized in that** the bore (221, 321) of greater diameter is dimensioned so that it forms the installation opening for the compensating gears and driving gears, the cage member (215, 315) and the bearing sleeve (231, 331) forming a closed, especially a fluid-tight cavity (245, 345) once bearing pins for compensating gears and the axle driving shafts are installed.

6. The differential cage as claimed in any one of claims 1 to 5, **characterized in that** the teeth (205, 305) of the axle drive gear (203, 205) are induction hardened, especially by means of a dual frequency induction process.

7. The differential cage as claimed in any one of claims 1 to 6, **characterized in that** a parking lock gear forms a one-piece forging together with the cage member and the axle drive gear.

8. The differential cage as claimed in claim 7, **characterized in that** the parking lock gear is disposed at the side of the axle drive gear facing the cage member and adjacent the same, the cage member preferably being formed with lateral installation openings for introducing compensating gears and driving gears into the cavity, part of said openings extending into the parking lock gear.

9. The differential cage as claimed in claim 7 or 8, **characterized in that** the differential cage includes aligned bores having a common axis (A) to accommodate a bearing pin for the compensating gears, the spacing (a) of the axis (A) from the axle drive gear matching the desired size of a lateral installation opening.

10. The differential cage as claimed in any one of claims 7 to 9, **characterized in that** the teeth of the axle drive gear are induction hardened.

11. The differential cage as claimed in any one of claims 7 to 10, **characterized in that** the teeth of the parking lock gear are induction hardened.

12. A method of making a differential cage comprising a cage member (215, 315) the cavity (245, 345) of which is machined on the inside through a sufficiently great installation opening (221, 321) for the introduction, accommodation, and support of compensating gears and driving gears, the cage member (215, 315) and an axle drive gear (203, 303) being forged from a single piece, **characterized in that** a bearing sleeve (231, 331) is threaded into and press fitted in the axial bore (221, 321), especially shrunk into the axial bore.

13. The method as claimed in claim 12, **characterized in that** the axial bore (221, 321) is widened by heating, subsequently the bearing sleeve (231, 331) is threaded into the axial bore (221, 321), and the bearing sleeve (231, 331) is shrunk in the axial bore (221, 321) by cooling, whereby a press fit is formed.

14. The method as claimed in claim 12 or 13, **characterized in that** the teeth (205, 305) of the axle drive gear (203, 303) are induction hardened, especially by a dual frequency induction process.

15. The method as claimed in claim 14, **characterized in that** the teeth (205, 305) are subjected to a high frequency and a medium frequency, especially at the same time.

16. The method as claimed in claim 15, **characterized in that** a frequency mix of high frequency and medium frequency is adjusted such that the layers near the surface will be heated equally from the root of the tooth to the tip of the tooth.

17. The method as claimed in any one of claims 12 to 16, **characterized in that** the cage member and an axle drive gear and a parking lock gear are forged from a single piece.

18. The method as claimed in claim 17, **characterized in that** the teeth of the axle drive gear and/or the teeth of the parking lock gear are induction hardened, preferably in a dual frequency induction process, especially the respective teeth being subjected to a high frequency and a medium frequency, especially simultaneously, in a dual frequency induction process, the frequency mix of high frequency and medium frequency preferably being adjusted so that the layers near the surface are heated equally from the root of the tooth to the tip of the tooth.

## Revendications

1. Boîtier du différentiel pour un engrenage différentiel ayant une partie du boîtier du différentiel (215, 315) qui présente une cavité (245, 345) usinée de l'intérieur avec une ouverture de montage (221, 244, 321) pour pignons de différentiel et de sortie d'essieux, et un pignon d'entraînement des essieux (203, 303) raccordé d'une pièce avec la partie du boîtier du différentiel (215, 315), cette partie (215, 315) présentant deux trous d'alésage (221, 223, 321, 323) permettant de loger chacun un arbre de sortie de l'essieu, l'un (221, 321) des alésages ayant un plus grand diamètre que l'autre et étant dimensionné de manière suffisante pour permettre l'introduction d'un outil d'usinage dans la cavité (245, 345), **caractérisé en ce qu'**un manchon (41) permettant de loger l'arbre de sortie de l'essieu correspondant dans l'alésage et ayant un diamètre supérieur est vissé et mis en place par pression.

2. Boîtier du différentiel selon la revendication 1, **caractérisé en ce que** le manchon (231, 331) présente un filet extérieur (228, 328), qui est vissé dans un filet intérieur (227, 327) de l'alésage (221, 321) de diamètre supérieur, et une surface extérieure contiguë au filet extérieur (228, 328), qui est ajustée par pression à la cavité correspondante de l'alésage (221, 321) de diamètre supérieur.

3. Boîtier du différentiel selon la revendication 2, **caractérisé en ce que** le filet intérieur présente un diamètre un peu plus petit que la cavité.

4. Boîtier du différentiel selon l'une des revendications 1 à 3, **caractérisé en ce qu'**une gorge (251, 351) est prévue comme réserve de lubrifiant sur la surface intérieure de la cavité (245, 345), qui est placée notamment dans un plan radial du boîtier du différentiel (201, 301), dans lequel se trouvent de préférence les axes Z des alésages (253, 359) d'un axe de roulement pour les pignons de différentiel.

5. Boîtier du différentiel selon l'une des revendications 1 à 4, **caractérisé en ce que** l'alésage (221, 321) de diamètre supérieur est dimensionné de manière à former l'ouverture de montage pour les pignons du différentiel et de la sortie des essieux, la partie du boîtier du différentiel (215, 315) et le manchon (231, 331) formant une cavité (245, 345) fermée et, notamment, étanche lorsque les axes de roulement pour pignons de différentiel et les arbres de sortie des essieux sont montés.

6. Boîtier du différentiel selon l'une des revendications 1 à 5, **caractérisé en ce que** la denture (205, 305) du pignon d'entraînement de l'essieu (203, 205) est trempée par induction, notamment selon un procédé d'induction à deux fréquences.

7. Boîtier du différentiel selon l'une des revendications 1 à 6, **caractérisé en ce qu'**un pignon de frein de stationnement forme avec la partie du boîtier du différentiel et le pignon d'entraînement de l'essieu une pièce forgée d'un seul tenant.

8. Boîtier du différentiel selon la revendication 7, **caractérisé en ce que** le pignon de frein de stationnement est placé du côté du pignon d'entraînement de l'essieu qui est tourné vers la partie du boîtier du différentiel et lui est contigu, des ouvertures de montage latérales étant prévues de préférence dans la partie du boîtier du différentiel pour introduire des pignons de différentiel et de sortie d'essieux dans la cavité, ouvertures qui arrivent en partie jusqu'au pignon de frein de stationnement.

9. Boîtier du différentiel selon la revendication 7 ou 8, **caractérisé en ce que** la partie du boîtier du différentiel présente des alésages alignés ayant un axe commun (A) pour recevoir l'axe de roulement pour les pignons de différentiel, la distance (a) entre l'axe (A) et le pignon d'entraînement des essieux étant adaptée à la taille désirée d'une ouverture de montage latérale.

10. Boîtier du différentiel selon l'une des revendications 7 à 9, **caractérisé en ce que** la denture du pignon d'entraînement des essieux est trempée par induction.

11. Boîtier du différentiel selon l'une des revendications 7 à 10, **caractérisé en ce que** la denture du pignon du frein de stationnement est trempée par induction.

12. Procédé de fabrication d'un boîtier du différentiel ayant une partie (215, 315) dont la cavité (245, 345) est usinée de l'intérieur par un alésage axial (221, 321) de dimension suffisante en vue de l'introduction, du logement et du stockage de pignons de différentiel et de sortie d'essieux, la partie du boîtier du différentiel (215, 315) ayant un pignon d'entraînement de l'essieu étant forgée à partir d'une seule pièce, **caractérisé en ce qu'**un manchon (231, 331) est vissé dans l'alésage axial (221, 321) et ajusté à lui par pression, notamment est comprimé dans l'alésage axial.

13. Procédé de fabrication selon la revendication 12, **caractérisé en ce que** l'alésage axial (221, 321) est dilaté par réchauffement, le manchon (231, 331) est ensuite vissé dans l'alésage axial (221, 321), puis le manchon (231, 331) est comprimé par refroidissement dans l'alésage axial (221, 321), de façon à réaliser un ajustage serré.

14. Procédé de fabrication selon la revendication 12 ou 13, **caractérisé en ce que** la denture (205, 305) du pignon d'entraînement de l'essieu (203, 303) est trempée par induction, notamment selon un procédé d'induction à deux fréquences.

15. Procédé de fabrication selon la revendication 14, **caractérisé en ce que** la denture (205, 305) est soumise à une haute fréquence et à une moyenne fréquence, en particulier simultanément.

16. Procédé de fabrication selon la revendication 15, **caractérisé en ce qu'**un spectre de fréquences constitué d'une haute fréquence et d'une moyenne fréquence est réglé de telle manière que les couches superficielles du pied de dent jusqu'au sommet de la dent sont réchauffées de façon égale.

17. Procédé selon l'une des revendications 12 à 16, **caractérisé en ce que** la partie du boîtier du différentiel ayant un pignon d'entraînement des essieux et un pignon de frein de stationnement est forgée à partir d'une seule pièce.

18. Procédé de fabrication selon la revendication 17, **caractérisé en ce que** la denture du pignon d'entraînement de l'essieu et/ou celle du pignon du frein de stationnement sont trempées par induction, de préférence par un procédé d'induction à deux fréquences, chaque denture respective étant notamment soumise, dans le cas d'un procédé à deux fréquences, à une haute fréquence et à une moyenne fréquence, en particulier simultanément, le spectre de fréquences constitué d'une haute et d'une moyenne fréquence étant de préférence réglé de telle façon que les couches superficielles du pied de dent jusqu'au sommet de la dent sont réchauffées de façon égale.
